# FASCICULE DE BREVET EUROPEEN

(11) **EP 0 766 644 B1**
(45) Date de publication et mention de la délivrance du brevet: **01.12.1999**
(21) Numéro de dépôt: 95920910.7
(22) Date de dépôt: 30.05.1995
(51) Int. Cl.: C01B 7/07

(54) **PROCEDE POUR L'ELIMINATION DE TRICHLORURE D'AZOTE PRESENT DANS DU CHLORE BRUT**
VERFAHREN ZUR ENTFERNUNG VON STICKSTOFFTRICHLORID AUS CHLORROHPRODUKTEN
METHOD FOR REMOVING NITROGEN TRICHLORIDE FROM RAW CHLORINE

(30) Priorité: 23.06.1994 FR 9407860
(43) Date de publication de la demande: 09.04.1997
(73) Titulaire: SOLVAY (Société Anonyme), 1050 Bruxelles (BE)
(72) Inventeur: VAN DIEST, Jacques, B-1640 Rhode-Saint-Genese (BE); FILIPPONE, Mauro, I-57012 Rosignano-Castiglioncello (IT)
(74) Mandataire: Anthoine, Paul
(86) Numéro de dépôt international: EP9502058
(87) Numéro de publication internationale: WO9600187

(56) Documents cités:
- DE-B- 1 034 156
- US-A- 2 692 818

## Description

La présente invention concerne un procédé pour l'élimination de trichlorure d'azote présent dans du chlore brut.

Il est connu que le trichlorure d'azote est un composé très instable dont la décomposition est souvent accompagnée d'une violente déflagration. Du trichlorure d'azote est souvent présent dans le chlore fabriqué par voie électrolytique. En conséquence, lors d'une évaporation de chlore brut préalablement liquéfié pour son stockage et son transport, il peut y avoir enrichissement progressif du chlore liquide en trichlorure d'azote, avec le risque que sa concentration dépasse le seuil d'explosibilité. Il convient donc d'éliminer au maximum cette impureté du chlore.
Le brevet US-A-2692818 décrit un procédé d'élimination du trichlorure d'azote du chlore, qui consiste à faire passer le chlore à l'état gazeux sur un lit contenant un matériau adsorbant tel que l'alumine activée, la bauxite activée, le silicagel ou l'alumine activée enrobée de chlorure cuivrique. L'enrobage de l'adsorbant au moyen d'un sel métallique nécessite une opération industrielle qui complique ce procédé connu. Elle a en outre pour résultat d'introduire des ions métalliques supplémentaires qui peuvent être nuisibles pour la pureté du produit final. D'autre part, il ressort du brevet US-A-2692818 que l'activité de ces adsorbants connus diminue très vite dans le temps. La durée de vie étant de l'ordre de 10 jours, une régénération fréquente est nécessaire pour améliorer les performances de ces adsorbants.

On a trouvé un procédé plus économique. qui ne présente pas les inconvénients précités et dont l'éfficacité est améliorée et durable.

L'invention concerne dès lors un procédé pour l'élimination de trichlorure d'azote présent dans du chlore brut, qui se caractérise en ce qu'on met ledit chlore à l'état gazeux en contact avec un charbon actif, selon les modalités précisées par la revendication 1.

Par chlore brut, on entend désigner du chlore contaminé par du trichlorure d'azote. La teneur en trichlorure d'azote dans le chlore peut varier dans de larges limites. Elle dépend essentiellement de la qualité des matières premières utilisées pour la fabrication du chlore ainsi que de son procédé de fabrication. En général, la teneur en trichlorure d'azote dans le chlore brut est de l'ordre de 5 à 2 000 ppm. Le chlore brut mis en oeuvre dans le procédé peut, outre du trichlorure d'azote, contenir d'autres impuretés. Toutefois, pour des problèmes de corrosion, il est préférable que le chlore brut mis en oeuvre soit sec. Le séchage préalable du chlore peut être fait par diverses techniques bien connues par l'homme du métier. Il peut notamment être effectué en faisant passer le chlore brut à l'état gazeux dans de l'acide sulfurique concentré.

La nature du charbon actif utilisé dans le procédé selon l'invention n'apparaît pas critique. Les charbons actifs classiques utilisés pour l'adsorption de vapeurs ou de liquides peuvent être mis en oeuvre. De bons résultats ont été obtenus avec des charbons actifs vendus sous les noms commerciaux NORIT®RL II, SUTCLIFFE & SPEAKMANN 203 B et SUTCLIFFE & SPEAKMANN 207 C. Le charbon actif est généralement mis en oeuvre à l'état d'une poudre. En pratique, on sélectionne une poudre présentant un diamètre moyen de particules supérieur à 0,5 mm (de préférence au moins égal à 1 mm) et inférieur à 20 mm (de préférence inférieur ou égal à 15 mm). De très bons résultats ont été obtenus avec un charbon actif de granulométrie caractérisée par un diamètre moyen de 4 à 10 mm.

Bien que, initialement, le charbon actif puisse contenir une quantité variable d'eau, il est préférable d'éliminer cette eau avant de mettre le charbon actif en oeuvre dans le procédé selon l'invention. En effet, la présence d'humidité sur du charbon actif risque, en présence du chlore, de générer de l'acide chlorhydrique qui, à son tour, risque de provoquer une corrosion des installations. Le charbon actif mis en oeuvre dans le procédé selon l'invention est donc, de préférence, sec. Le séchage du charbon actif peut être effectué par n'importe quel moyen approprié connu dans la technique. De bons résultats ont été obtenus en séchant le charbon actif pendant quelques heures sous un courant d'air, à une température supérieure ou égale à environ 160 °C, mais ne dépassant pas de préférence 200 °C. De bons résultats ont également été obtenus en séchant le charbon actif pendant quelques heures sous un courant d'azote, à une température supérieure ou égale à 180 °C et ne dépassant pas de préférence 260 °C. Les meilleurs résultats ont été obtenus en séchant le charbon actif sous un courant d'azote, à une température d'environ 220 °C. Le traitement de séchage du charbon actif est effectué jusqu'au moment que la teneur en eau du gaz utilisé pour le séchage est faible, de préférence inférieure ou égale à 0,03 g/m³. Puis, le charbon actif est refroidi progressivement jusqu'à température ambiante, sous un courant d'air ou d'azote sec.

Dans le procédé selon l'invention, la mise en contact entre le chlore brut et le charbon actif peut être réalisée suivant différentes techniques bien connues de l'homme du métier, dans tout appareillage adéquat. On préfère généralement disposer le charbon actif sous la forme d'un lit fixe de particules, que l'on fait traverser par un courant du chlore brut à épurer. Il est également possible de disposer le charbon actif sous la forme de deux ou plusieurs lits fixes montés en série. Le temps de contact entre le chlore brut et le charbon actif est généralement d'au moins 1 s, le temps de contact étant défini comme le rapport du volume du charbon actif au débit volumique du courant de chlore brut. De préférence, on travaille avec un temps de contact d'au moins 3 s. De bons résultats ont été obtenus avec un temps de contact d'au moins 5 s. En principe, on peut travailler avec un temps de contact très long, par exemple plusieurs minutes. En pratique, pour des raisons d'efficacité, on travaille généralement avec un temps de contact inférieur ou égal à 120 s, de préférence inférieur ou égal à 60 s.

La température à laquelle est effectué le procédé selon l'invention n'est pas critique en elle-même. Elle va toutefois influencer la durée du traitement et on a dès lors intérêt à travailler à une température suffissante, généralement au moins égale à 10 °C. En pratique, pour des considérations économiques et de sécurité, il convient d'éviter une température excessive. On recommande dès lors une température qui ne dépasse pas 100 °C. de préférence 80 °C. La pression à laquelle est effectué le procédé selon l'invention n'est pas critique en elle-même et est conditionnée par la température du chlore brut mis en oeuvre. En général, la pression est au moins égale à la pression atmosphérique. En général. elle ne dépasse pas 30 bar.

On met en oeuvre du charbon actif qui a au préalable été prétraité au moyen de chlore. Le prétraitement du charbon actif au moyen de chlore est effectué avec du chlore gazeux et sec. Pour une question de sécurité, on recommande que le prétraitement du charbon actif au moyen de chlore soit effectué d'une telle façon que la température ne dépasse pas environ 100 °C. L'adsorption du chlore sur le charbon actif étant exothermique, il y a donc lieu de contrôler attentivement les conditions du prétraitement. Selon une forme d'exécution avantageuse, le prétraitement au moyen de chlore, est effectué en deux phases distinctes. Lors d'une première phase, le charbon actif est soumis à un courant de chlore dilué dans un gaz inerte, sous une pression environ égale à la pression atmosphérique. De bons résultats ont été obtenus en soumettant le charbon actif à un courant d'azote contenant initialement environ 1 % de chlore, puis en augmentant progressivement la teneur en chlore pour obtenir à la fin du prétraitement un courant de 100 % de chlore. La durée de cette première phase de prétraitement au moyen de chlore dépend de plusieurs paramètres tels que la nature du charbon actif. les caractéristiques du réacteur dans lequel est effectué le prétraitement, un éventuel refroidissement du réacteur. La première phase du prétraitement est tenninée quand, malgré un apport de chlore, la température du réacteur commence à diminuer. La deuxième phase du prétraitement peut alors être abordée. Elle consiste à utiliser du chlore non dilué et à augmenter progressivement la pression du chlore jusqu'au moment où elle atteint la pression prévue pour le procédé d'élimination du trichlorure d'azote selon l'invention.

Le procédé selon l'invention s'applique à tout chlore brut contaminé par du trichlorure d'azote. Elle trouve une application particulière pour la purification du chlore fabriqué par voie électrolytique.

Le procédé selon l'invention permet d'épurer du chlore brut, jusqu'à obtenir une teneur résiduelle en trichlorure d'azote inférieure à 1 ppm, voire inférieure à 0,2 ppm.

Une explication possible de l'élimination du trichlorure d'azote serait qu'elle est essentiellement due à une décomposition catalytique du trichlorure d'azote dans laquelle les produits de décomposition seraient essentiellement de l'azote et du chlore, qui n'influencent pas la qualité du chlore épuré. Dès lors, dans le procédé selon l'invention, le trichlorure d'azote serait décomposé de manière continue et la durée de vie du catalyseur serait, en principe, illimitée et indépendante de la quantité de trichlorure d'azote traitée. En pratique, la durée de vie du charbon actif est limitée par l'empoisonnement du charbon actif par les autres impuretés présentes dans le chlore brut et elle dépend donc essentiellement de la pureté du chlore brut. Généralement, la durée de vie du charbon actif est de plusieurs mois, voire de plusieurs années. Le charbon actif empoisonné peut être régénéré, par exemple en faisant passer un courant d'azote, à une température d'environ 200 °C sur le charbon actif pendant quelques heures. Les explications données ci-avant sur le mécanisme de l'élimination du trichlorure d'azote sont données uniquement à titre d'information dans le but d'éclaircir le processus chimique et ne constituent pas une théorie par laquelle la demanderesse désire voir limitée la partie de l'invention revendiquée.

Les exemples suivants illustrent l'invention. Dans ces exemples, le dosage du trichlorure d'azote dans le chlore a été effectué par adsorption du trichlorure d'azote dans de l'acide chlorhydrique concentré, puis détermination du chlorure d'ammonium formé par la méthode au bleu d'indophénol. Les teneurs en trichlorure d'azote du chlore sont exprimées en ppm (poids).

### Exemple 1 (non confonne à l'invention)

Dans un filtre, muni d'une double enveloppe, d'un diamètre intérieur de 3,4 cm et d'une hauteur de 29 cm, on a placé un lit d'alumine activée. On a fait passer en continu sur l'alumine activée, à différents débits, un courant gazeux de chlore brut, mais sec et contenant entre environ 5 et 15 ppm de trichlorure d'azote.

Pour éliminer l'influence de la température sur les performances, le filtre est thermostatisé à une température de 20 °C. Après un intervalle de plusieurs heures la teneur en trichlorure d'azote du chlore sortant du filtre fut déterminée.

Les résultats obtenus sont présentés dans le tableau I.

**Tableau I**

| Débit | Temps de contact | Teneur en NCl₃ du chlore brut ppm | |
|---|---|---|---|
| l/h | s | Avant filtre | Après filtre |
| 54 | 17,5 | 5,1 | 2,3 |
| 54 | 17,5 | 10,9 | 2,9 |
| 104 | 9,1 | 12,6 | 2,3 |
| 164 | 5,8 | 13,3 | 6,6 |
| 204 | 4,6 | 9,0 | 2,0 |
| 300 | 3,2 | 9,4 | 6,6 |

Les exemples 2, 3 et 4 dont la description suit sont conformes à l'invention. Dans ces exemples, on a remplacé le lit d'alumine activée de l'exemple 1 par un lit de charbon actif.

### Exemple 2 (conforme à l'invention)

L'exemple 1 a été répété en remplaçant le lit d'alumine activée par du charbon actif.

Les résultats obtenus sont présentés dans le tableau II.

**Tableau II**

| Débit | Temps de contact | Teneur en NCl₃ du chlore brut ppm | |
|---|---|---|---|
| l/h | s | Avant filtre | Après filtre |
| 54 | 17,5 | 5,8 | 0 |
| 54 | 17,5 | 7,2 | 0 |
| 104 | 9,1 | 5,9 | 0,9 |
| 164 | 5,8 | 6,5 | 0 |
| 204 | 4,6 | 5,6 | 0 |
| 300 | 3,2 | 6,2 | 0 |

La comparaison des résultats de l'exemple 2 avec ceux de l'exemple 1 (non conforme à l'invention) montre la meilleure activité catalytique du charbon actif vis-à-vis de la décomposition du trichiorure d'azote.

### Exemple 3 (conforme à l'invention)

Dans un filtre d'un diamètre intérieur de 30 cm et d'une hauteur de 1 000 cm, on a placé un lit de charbon actif NORIT®RL II. On a fait passer en continu sur le charbon actif un courant gazeux de chlore brut, mais sec et contenant environ entre 1 et 10 ppm de trichlorure d'azote. L'essai fut conduit à température ambiante sans thermostatisation du filtre.

La teneur en trichlorure d'azote du chlore sortant du filtre fut déterminée sur une longue période d'essai.

Les résultats obtenus sont présentés dans le tableau III.

**Tableau III**

| Temps/démarrage | Quantité Cl₂ épuré | Temp. | Temps de contact | Teneur en NCl₃ du chlore brut ppm | |
|---|---|---|---|---|---|
| jours | m³x10³ | °C | s | Avant filtre | Après filtre |
| 1 | 0,56 | 20 | 9 | 3,9 | 0 |
| 2 | 1,2 | - | 9 | 1,0 | 0 |
| 5 | 3,2 | - | 9 | 3,9 | 0 |
| 7 | 5,2 | 22 | 4,7 | 5,3 | 0 |
| 14 | 14,3 | 22 | 4,7 | 3,3 | 0 |
| 22 | 25,5 | 17 | 3,8 | 1,0 | 0 |
| 30 | 38,2 | 20 | 3,8 | 9,3 | 0 |
| 40 | 55,6 | 20 | 3,1 | 3,8 | 0 |
| 54 | 82,1 | 17 | 3,1 | 6,7 | 0 |
| 73 | 90,0 | 20 | 3,75 | 4,8 | 0 |
| 84 | 106,3 | 17 | 3,75 | 7,2 | 0 |
| 94 | 122,4 | 11 | 3,75 | 10,2 | 0,7 |
| 105 | 140,0 | 15 | 3,75 | 9,0 | 0 |
| 116 | 157,7 | - | 3,75 | 6,6 | 0 |
| 128 | 178,6 | - | 3,75 | 8,4 | 0 |

Les résultats présentés dans ce tableau montrent que le charbon actif est toujours efficace après 128 jours de mise en oeuvre et une épuration de 178,6 x 10³ m³, c'est-à-dire 566 tonnes de chlore.

### Exemple 4 (conforme à l'invention)

Deux filtres de 500 cm³ ont été montés en série. Dans chaque filtre, on a placé un lit de charbon actif SUTCLIFFE & SPEAKMANN 207 C. On a fait passer en continu sur le charbon actif un courant gazeux de chlore brut, mais sec et contenant environ 2 000 ppm de trichlorure d'azote. L'essai fut conduit à température ambiante (25 °C) sans thermostatisation du filtre. Le débit du chlore brut a été réglé pour obtenir un temps de contact d'environ 3,4 s dans chaque filtre.

La teneur en trichlorure d'azote du chlore sortant du filtre fut déterminée pour une longue période d'essai.

Les résultats obtenus sont présentés dans le tableau IV.

**Tableau IV**

| Quantité de Cl₂ épuré | Teneur en NCl₃ du chlore brut ppm | |
|---|---|---|
| kg | Avant filtres | Après filtres |
| 14 | 2059 | 0,2 |
| 347 | 1825 | 0,2 |
| 724 | 2137 | 0,6 |
| 1000 | 1842 | 0,2 |
| 1991 | 2147 | 0,2 |
| 2960 | 2007 | < 0,2 |
| 3525 | 2270 | < 0,5 |

Les résultats dans ce tableau montrent que le charbon actif permet d'épurer d'une manière très efficace du chlore brut contaminé par des teneurs élevées en trichlorure d'azote. Ces résultats montrent également la grande efficacité du charbon actif d'un point de vue économique : en effet, une charge de 1 000 cm³ de charbon actif permet de traiter d'une manière satisfaisante plus de 3,5 tonnes de chlore brut.

## Revendications

1. Procédé pour l'élimination de trichlorure d'azote présent à raison d'au moins 5 ppm en poids dans du chlore brut, caractérisé en ce qu'on met ledit chlore brut à l'état gazeux en contact avec du charbon actif, jusqu'à ce que sa teneur résiduelle en trichlorure d'azote soit inférieure à 1 ppm en poids, ledit charbon actif ayant subi un prétraitement comprenant sa mise en contact avec du chlore gazeux sec dilué dans un gaz inerte, la dilution étant telle que la réaction exothermique du chlore avec le charbon actif ne conduise pas à dépasser une température de 100 °C.

2. Procédé selon la revendication 1, caractérisé en ce que le chlore brut contient de 5 à 2000 ppm de trichlorure d'azote.

3. Procédé selon la revendication 1 ou 2, caractérisé en ce que le chlore mis en contact avec le charbon actif est sec.

4. Procédé selon l'une quelconque des revendications 1 à 3, caractérisé en ce qu'on dispose le charbon actif sous la forme d'un lit fixe que l'on fait traverser par le chlore brut.

5. Procédé selon l'une quelconque des revendications 1 à 4, caractérisé en ce qu'on opère à une température qui ne dépasse pas 100 °C.

6. Procédé selon l'une quelconque des revendications 1 à 5, caractérisé en ce qu'on opère à une pression qui ne dépasse pas 30 bar.

7. Procédé selon l'une quelconque des revendications 1 à 6, caractérisé en ce qu'on met le chlore brut en contact avec le charbon actif pendant un temps de 1 s à 120 s.

8. Procédé selon la revendication 7, caractérisé en ce qu'on met le chlore brut en contact avec le charbon actif pendant un temps de 3 s à 60 s.

9. Procédé selon l'une quelconque des revendications 1 à 8, caractérisé en ce qu'on met en oeuvre du charbon actif qui a été séché au moyen d'azote à une température de 180 à 260 °C.

10. Procédé selon l'une des revendications 1 à 9, dans lequel la concentration du chlore dans le gaz inerte est d'environ 1 % au début du prétraitement et de 100 % à la fin du prétraitement.

## Claims

1. Process for the removal of nitrogen trichloride present in crude chlorine in amounts of at least 5 ppm , characterized in that the said crude chlorine in the gaseous state is brought into contact with activated carbon, until its residual nitrogen trichloride content is lower than 1 ppm by weight, said activated carbon having been subjected to a pre-treatment comprising the step of bringing it into contact with dry gaseous chlorine diluted in an inert gas, the dilution being such that the exothermic reaction of the chlorine with the activated carbon does not lead to exceeding a temperature of 100°C.

2. Process according to Claim 1, characterized in that the crude chlorine contains from 5 to 2000 ppm of nitrogen trichloride.

3. Process according to Claim 1 or 2, characterized in that the chlorine brought into contact with the activated carbon is dry.

4. Process according to either of Claims 1 to 3, characterized in that the activated carbon is arranged in the form of a stationary bed through which the crude chlorine is passed.

5. Process according to any one of Claims 1 to 4, characterized in that the operation is performed at a temperature which does not exceed 100°C.

6. Process according to any one of Claims 1 to 5, characterized in that the operation is carried out at a pressure which does not exceed 30 bar.

7. Process according to any one of Claims 1 to 6, characterized in that the crude chlorine is brought into contact with the activated carbon during a time of 1 s to 120 s.

8. Process according to Claim 7, characterized in that the crude chlorine is brought into contact with the activated carbon during a time of 3 s to 60 s.

9. Process according to any one of Claims 1 to 8, characterized in that activated carbon which has been dried with nitrogen at a temperature of 180 to 260°C is used.

10. Process according to any one of Claims 1 to 9, wherein the chlorine concentration in the inert gas is about 1 % at the beginning of the pre-treatment and 100 % at the end of the pre-treatment.

## Patentansprüche

1. Verfahren zur Entfernung von Stickstofftrichlorid, das in einer Menge von wenigstens 5 Gew.-ppm in rohem Chlor vorhanden ist, dadurch gekennzeichnet, daß man besagtes rohes Chlor in gasförmigem Zustand mit Aktivkohle in Kontakt bringt, bis sein Restgehalt an Stickstofftrichlorid kleiner als 1 Gew.-ppm ist, wobei besagte Aktivkohle einer Vorbehandlung unterzogen wurde, die ihr Inkontaktbringen mit trockenem gasförmigen Chlor, verdünnt in einem Inertgas, umfaßt, wobei die Verdünnung so ist, daß die exotherme Reaktion des Chlors mit der Aktivkohle nicht dazu führt, eine Temperatur von 100 °C zu übersteigen.

2. Verfahren gemäß Anspruch 1, dadurch gekennzeichnet, daß das rohe Chlor 5 bis 2000 ppm Stickstofftrichlorid enthält.

3. Verfahren gemäß Anspruch 1 oder 2, dadurch gekennzeichnet, daß das Chlor, das mit der Aktivkohle in Kontakt gebracht wird, trocken ist.

4. Verfahren gemäß einem der Ansprüche 1 bis 3, dadurch gekennzeichnet, daß man die Aktivkohle in der Form eines Festbetts anordnet, das man von dem rohen Chlor durchströmen läßt.

5. Verfahren gemäß einem der Ansprüche 1 bis 4, dadurch gekennzeichnet, daß man bei einer Temperatur arbeitet, die 100 °C nicht übersteigt.

6. Verfahren gemäß einem der Ansprüche 1 bis 5, dadurch gekennzeichnet, daß man bei einem Druck arbeitet, der 30 bar nicht übersteigt.

7. Verfahren gemäß einem der Ansprüche 1 bis 6, dadurch gekennzeichnet, daß man das rohe Chlor mit der Aktivkohle während einer Zeit von 1 s bis 120 s in Kontakt bringt.

8. Verfahren gemäß Anspruch 7, dadurch gekennzeichnet, daß man das rohe Chlor mit der Aktivkohle während einer Zeit von 3 s bis 60 s in Kontakt bringt.

9. Verfahren gemäß einem der Ansprüche 1 bis 8, dadurch gekennzeichnet, daß man Aktivkohle einsetzt, die mittels Stickstoff bei einer Temperatur von 180 bis 260 °C getrocknet wurde.

10. Verfahren gemäß einem der Ansprüche 1 bis 9, bei dem die Konzentration des Chlors in dem Inertgas am Anfang der Vorbehandlung ungefähr 1% und am Ende der Vorbehandlung 100% beträgt.
